# EUROPEAN PATENT APPLICATION

(11) **EP 1 626 554 A2**
(43) Date of publication of application: **15.02.2006**
(21) Application number: 05017365.7
(22) Date of filing: 10.08.2005
(51) Int. Cl.: H04L 29/06

(54) **Mobile communication system and service control device**

(30) Priority: 10.08.2004 JP 2004233596
(71) Applicant: NTT DoCoMo, Inc., Tokyo (JP)
(72) Inventor: Kozu, Kazuyuki, Int. Prop. Dpt., NTT DoCoMo, Inc., Chiyoda-ku, Tokyo (JP); Otsuki, Katsunobu, Int. Prop. Dpt., NTT DoCoMo Inc, Chiyoda-ku, Tokyo (JP)
(74) Representative: HOFFMANN EITLE

(57) **Abstract**

In a mobile communication system, an upper service control device transmits broadcast data to a plurality of mobile stations through a plurality of lower service control devices, based on a tree structure including a plurality of service control devices. The upper service control device is configured to stop only transmitting the broadcast data to the lower service control device in which it is detected that a failure has occurred, when detecting that the failure has occurred in any one of the plurality of the lower service control devices.

## Description

### CROSS REFERENCE TO RELATED APPLICATION

This application is based upon and claims the benefit of priority from the prior Japanese Patent Application No. P2004-233596, filed on August 10, 2004; the entire contents of which are incorporated herein by reference.

### BACKGROUND OF THE INVENTION

### 1. Field of the Invention

The present invention relates to a mobile communication system in which an upper service control device transmits broadcast data to a plurality of mobile stations through a plurality of lower service control devices, based on a tree structure including a plurality of service control devices, and relates to a service control device used therein.

### 2. Description of the Related Art

Conventionally, an MBMS (Multimedia Broadcast/Multicast Service) has been defined in a 3GPP (third Generation Partnership Project) .

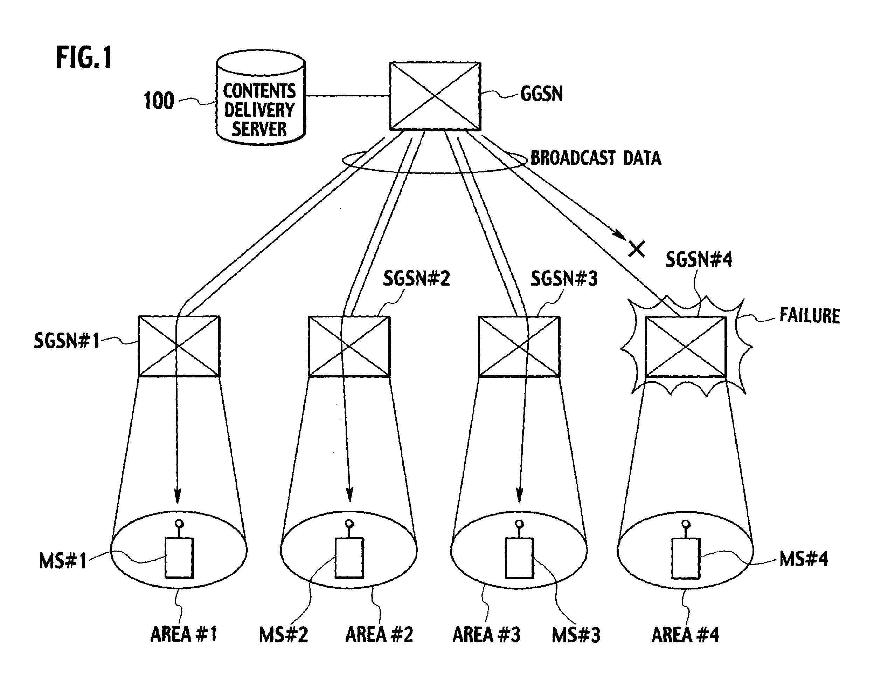

As shown in FIG. 1, the MBMS has a configuration that an upper node (upper service control device) of GGSN (Gateway GPRS (General Packet Radio Service) Support Node) transmits broadcast data (or multicast data) to a plurality of mobile stations MS 1 to 4 which are located in areas 1 to 3, by way of lower nodes (lower service control devices) SGSN (Serving GPRS Support Node) 1 to 4.

However, the conventional mobile communication system providing the MBMS has had a problem in that the upper node GGSN (sender of the broadcast data) keeps transmitting the broadcast data to a specific lower node SGSN 4, because the upper node GGSN can not detect a failure which has occurred in the lower node SGSN 4, even when there are caused a failure (congestions and the like) in the lower node SGSN 4 (that is, when the lower node SGSN 4 is in an abnormal state) as shown in FIG. 1.

At the same time, the lower node SGSN 4 discards the received broadcast data, because the lower node SGSN 4 cannot understand the broadcast data since a context of "bearer context" corresponding to the received broadcast data is not managed in the lower node SGSN 4.

That is, the conventional mobile communication system providing the MBMS has a problem in that network resources cannot be effectively used, because the upper node GGSN keeps transmitting needless broadcast data to a network after a failure is caused in the lower node SGSN 4.

Moreover, the conventional mobile communication system providing the MBMS has also had a problem in that the mobile station MS 4 located in the area 4 under control of the lower node SGSN 4 remains in a state that the broadcast data cannot be received even when the mobile stations MS 1 to 3 which are located in the areas 1 to 4 under control of the lower nodes SGSN 1 to 3 can receive the broadcast data, because a session for transmitting the broadcast data from the upper node GGSN to the lower node SGSN 4 is not reestablished even when the lower node SGSN 4 is recovered from the failure.

### BRIEF SUMMARY OF THE INVENTION

The present invention has been made considering the problems, and its object is to provide a mobile communication system and a service control device which can improve efficiency for using network resources, and can avoid a state that a mobile station under control of the lower node SGSN cannot receive broadcast data due to the occurred failure, even when a failure occurs at a specific lower node SGSN in an MBMS.

A first aspect of the present invention is summarized as a mobile communication system in which an upper service control device transmits broadcast data to a plurality of mobile stations through a plurality of lower service control devices, based on a tree structure including a plurality of service control devices, wherein: the upper service control device is configured to stop only transmitting the broadcast data to the lower service control device in which it is detected that a failure has occurred, when detecting that the failure has occurred in any one of the plurality of the lower service control devices.

In the first aspect, the upper service control device can be configured to restart transmitting the broadcast data to the lower service control device in which it is detected that the failure has been recovered, when detecting that the failure has been recovered in any one of the plurality of the lower service control devices.

In the first aspect, the upper service control device can be configured to use a common tree structure, when a plurality of kinds of broadcast data are transmitted.

A second aspect of the present invention is summarized as a service control device including: a tree-structure manager configured to manage a tree structure including a plurality of service control devices; and a transmitter configured to transmit broadcast data to a plurality of mobile stations through a plurality of lower service control devices, based on the tree structure, wherein: the tree structure manager is configured to delete the lower service control device which has transmitted a failure occurrence signal from the tree structure, when receiving the failure occurrence signal from any one of the plurality of lower service control devices.

In the second aspect the tree-structure manager can be configured to add the lower service control device which has transmitted a failure recovery signal to the tree structure, when receiving a failure the failure recovery signal from any one of the plurality of lower service control devices.

### BRIEF DESCRIPTION OF THE SEVERAL VIEWS OF THE DRAWINGS

FIG. 1 is a general view of a mobile communication system according to a related art;
FIG. 2 is a general view of a mobile communication system according to a first embodiment of the present invention;
FIG. 3 is a general view of another mobile communication system according to the first embodiment of the present invention;
FIG. 4 is a functional block diagram of a mobile communication system according to the first embodiment of the present invention;
FIG. 5 is a view showing one example of a tree structure managed by a mobile station according to the first embodiment of the present invention; and
FIG. 6 is a sequence flow diagram showing operations of the mobile communication system according to the first embodiment of the invention.

### DETAILED DESCRIPTION OF THE INVENTION

### (Configuration of a mobile communication system according to a first embodiment of the present invention)

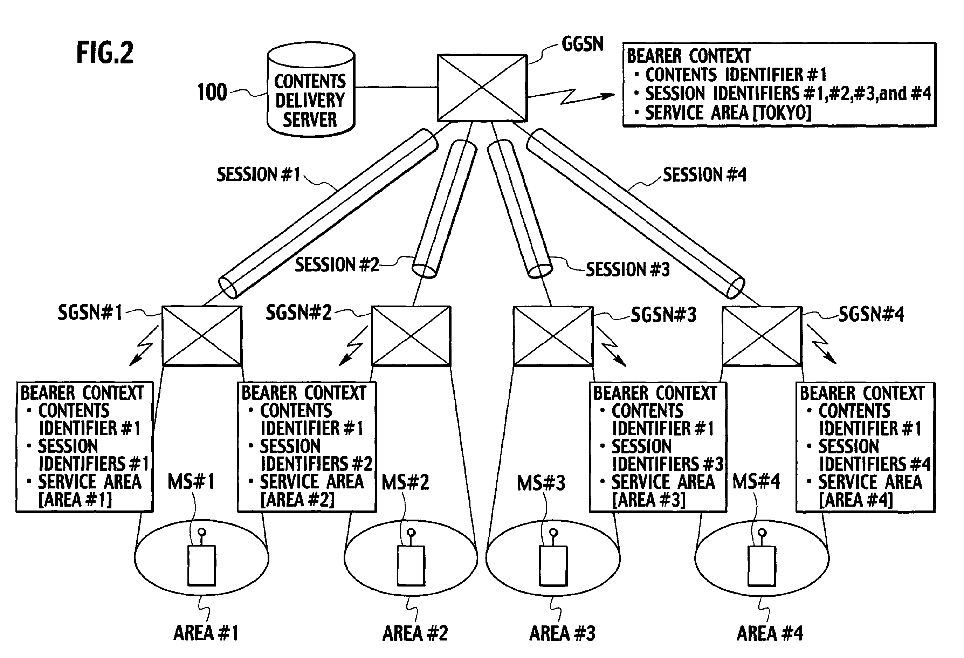

Referring to FIGS. 2 to 5, a configuration of a mobile communication system according to a first embodiment of the present invention will be explained.

The mobile communication system according to the present embodiment has a configuration in which, an upper node (upper service control device) GGSN transmits broadcast data (contents) stored in a contents delivery server 100 to a plurality of mobile stations MS 1 to 4 located in areas 1 to 4 through a plurality of lower nodes (lower service control devices) SGSN 1 to 4, based on a tree structure including a plurality of nodes (service control devices). As described above, the mobile communication system according to this embodiment provides an MBMS.

In an example of FIG. 2, sessions 1 to 4 are established between the upper node GGSN and the lower nodes SGSN 1 to 4 respectively, for transmitting or receiving broadcast data.

In order to realize broadcast communications which transmitting the above-described broadcast data to a plurality of the mobile stations MS 1 to 4, each of the node GGSN and the nodes SGSN 1 to 4, which are involved in the above-described established sessions, manages a context of "Bearer Context" indicating information on the broadcast communications.

For example, the context of "Bearer Context" includes: a contents identifier for identifying broadcast data; a session identifier for identifying a session through which the broadcast data is exchanged; and service area information on a service area in which the broadcast communication can be executed.

Moreover, each of the node GGSN and the nodes SGSN 1 to 4 establishes different sessions respectively, and also holds separate contexts of "Bearer Context" for different kinds of broadcast data respectively.

That is, each of the node GGSN and the nodes SGSN 1 to 4 holds a plurality of contexts of "Bearer Context", and establishes a plurality of sessions, when a plurality of broadcast communications are executed at the same time.

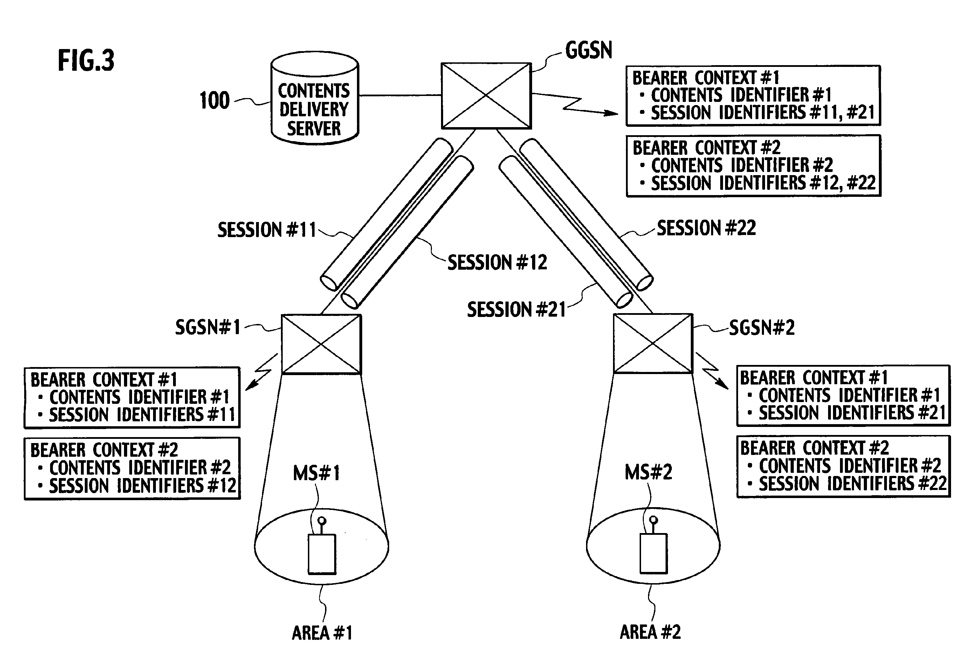

In an example of FIG. 3, an upper node GGSN holds a context of "Bearer Context 1" for broadcast data identified by a contents identifier 1. At the same time, a session 11 is established between the node GGSN and a lower node SGSN 1, and a session 21 is established between the node GGSN and a lower node SGSN 2.

On the other hand, the upper node GGSN holds a context of "Bearer Context 2" for broadcast data identified by a contents identifier 2. At the same time, a session 12 is established between the node GGSN and a lower node SGSN 1, and a session 22 is established between the node GGSN and a lower node SGSN 2.

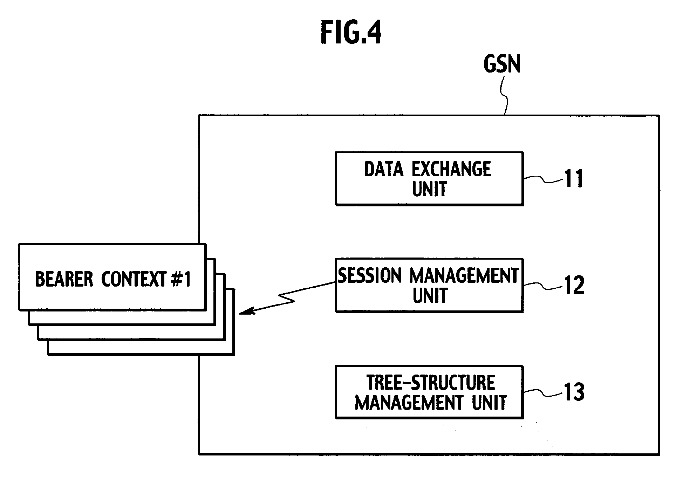

The node GGSN and the nodes SGSN 1 to 4 (that_is, GSN) according to the present embodiment include: a data exchange unit 11; a session management unit 12; and a tree-structure management unit 13, as shown in FIG. 4.

The data exchange unit 11 is configured to transmit broadcast data to a plurality of mobile stations MS, through a corresponding lower node among a plurality of lower nodes, based on a tree structure (described later) which is managed by the tree-structure management unit 13.

Moreover, the data exchange unit 11 is configured to transmit to an upper node an error signal indicating that the failure has occurred and has been recovered, when a failure has occurred and recovered at the node GSN.

Moreover, the data exchange unit 11 may be configured to transmit to an upper node a failure occurrence signal indicating that the failure has occurred, when a failure occurs at the node GSN.

Furthermore, the data exchange unit 11 may be configured to transmit to an upper node a failure recovery signal indicating that the failure has been recovered, when the failure has been recovered at the node GSN.

Moreover, the data exchange unit 11 is configured to receive the above-described error signal, the above-described failure occurrence signal, and the above-described failure recovery signal, from the lower nodes.

The session management unit 12 is configured to perform session establishing process on each session for exchanging broadcast data, and to hold contexts of "Bearer Context" corresponding to each session.

In order to realize the above-described broadcast communications, the tree-structure management unit 13 is configured to manage the tree structure which is formed by a plurality of nodes.

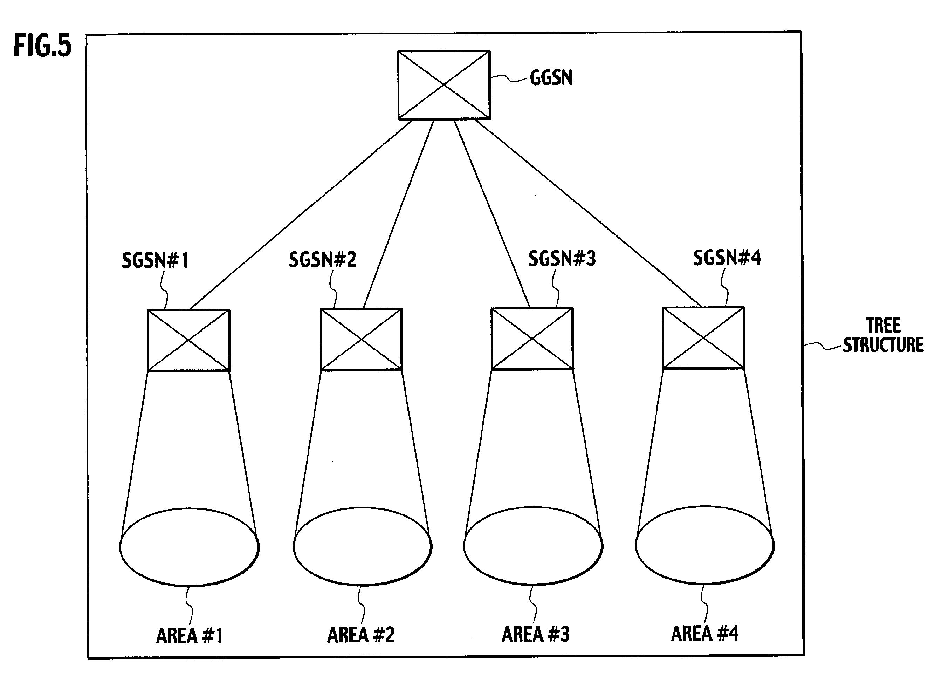

FIG. 5 shows one example of the tree structure managed by the tree-structure management unit 13. The tree structure shows that an upper node GGSN transmits broadcast data to a plurality of lower nodes SGSN 1 to 4, and that each of lower node SGSN 1 to 4 transmits the broadcast data to a mobile station MS located in an area 1 to 4.

Moreover, when receiving a failure occurrence signal or an error signal from any one of a plurality of the lower nodes, the tree-structure management unit 13 is configured to eliminate a lower node which has transmitted the failure occurrence signal or error signal from the tree structure.

As the result, when detecting that a failure has occurred in any one of a plurality of lower nodes, the node GSN can stop only transmitting broadcast data to a lower node in which failure is detected.

Moreover, when receiving a failure recovery signal or an error signal from any one of a plurality of the lower nodes, the tree-structure management unit 13 is configured to add a lower node which has transmitted the failure recovery signal or error signal to the tree structure.

As the result, when detecting that any one of a plurality of lower nodes has been recovered from the failure, the node GSN can restart transmitting broadcast data to the lower node which is detected to have been recovered from the failure.

Moreover, when transmitting different kinds of broadcast data, the tree-structure management unit 13 may be configured to use different tree structures for different kinds of broadcast data, or to use a common tree structure for different kinds of broadcast data.

### (Operations of the mobile communication system according to the first embodiment of the present invention)

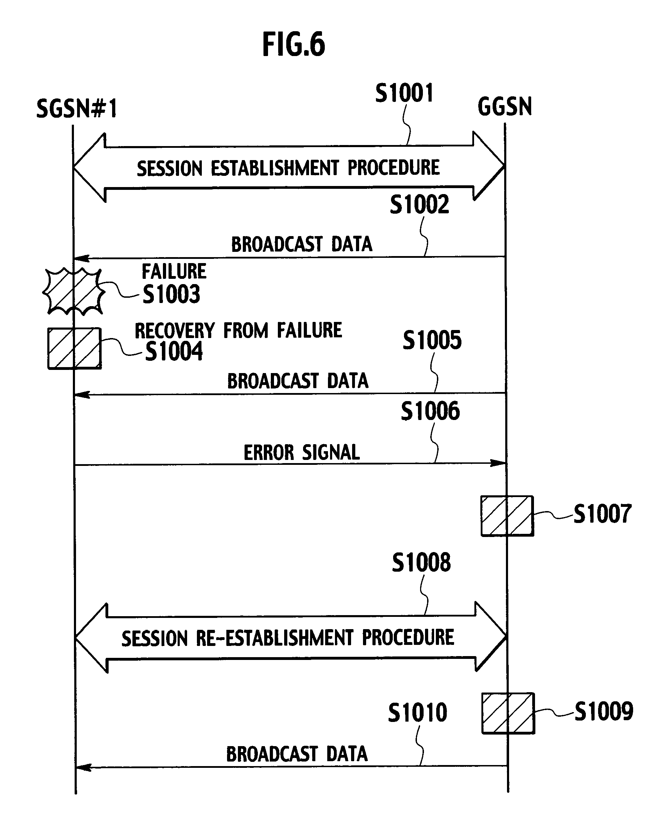

Operations of the mobile communication system according to the first embodiment of the present invention will be explained referring to FIG. 6.

At step S1001, sessions are established between the upper node GGSN and the lower nodes SGSN 1 to 4.

At step S1002, the upper node GGSN transmits broadcast data to the lower nodes SGSN 1 to 4, referring to the tree structure managed by the tree-structure management unit 13.

At step S1003, a failure occurs in the lower node SGSN 1. At this time, the session management unit 12 in the lower node SGSN 1 loses a context of "Bearer Context 1" which has been generated when a session 1 is established between the upper node GGSN and the node SGSN 1.

At step S1004, the lower node SGSN 1 is recovered from the failure which has occurred at the step S1003.

When the upper node GGSN transmits broadcast data to the lower node SGSN 1 at step S1005, the lower node SGSN 1 cannot refer to the information on the broadcast data (that is, can not recognize the broadcast data), because a context of "Bearer Context 1" for the broadcast data has been lost in the lower node SGSN 1. Accordingly, the lower node SGSN 1 discards the received broadcast data.

At step S1006, the lower node SGSN 1 transmits an error signal indicating that the failure has occurred in the lower node SGSN 1 and the node SGSN 1 has been recovered from the failure, to the upper node GGSN.

At step S1007, based on the received error signal, the upper node GGSN stops transmitting broadcast data to the lower node SGSN 1 by temporarily deleting the lower node SGSN 1 which has transmitted the error signal from the tree structure managed by the tree-structure management unit 13, and avoids needless transmission of data.

Here, the tree-structure management unit 13 in the upper node GGSN can stop all broadcast communications to the lower node SGSN 1 which are simultaneously provided, by correcting information only on one tree structure, if the tree-structure management unit 13 is configured to transmit different kinds of broadcast data by use of common tree structure.

At step S1008, the upper node GGSN detects recovery from the failure, and reestablishes the session 1 for exchanging broadcast data between the upper node GGSN and the lower node SGSN 1. Here, the context of "Bearer Context 1" for the broadcast data is regenerated in the upper node GGSN and the lower node SGSN 1.

At step S1009, the upper node GGSN adds the lower node SGSN 1 again to the tree structure managed by the tree-structure management unit 13, based on the above-described reestablishment of the session 1.

As the result, the upper node GGSN restarts transmitting all kinds of broadcast data to the lower node SGSN 1, at step S1010.

Here, the lower node SGSN 1 may be configured to transmit a failure occurrence signal indicating that the failure has occurred to the upper node GGSN, when the lower node SGSN 1 detects at the step S1003 that a failure has occurred (for example, when broadcast data which can not be recognized is received).

Moreover, the lower node SGSN 1 may be configured to transmit a failure recovery signal that indicates recovery from failure, when the lower node SGSN 1 detects at the step S1005 that the lower node SGSN 1 has been recovered from the failure, instead of an error signal, to the upper node GGSN.

In such a case, based on the failure occurrence signal which the lower node SGSN 1 has transmitted, the upper node GGSN stops transmitting broadcast data to the lower node SGSN 1 by temporarily deleting the lower node SGSN 1 which has transmitted the failure occurrence signal from the tree structure managed by the tree-structure management unit 13. As the result, needless transmission of data is avoided.

In such a case, the upper node GGSN detects, based on the failure recovery signal transmitted from the lower node SGSN 1, that the lower node SGSN 1 has been recovered from the failure, and reestablishes the session 1 for exchanging broadcast data between the upper node GGSN and the lower node SGSN 1.

### (Advantages of the mobile communication system according to the first embodiment of the present invention)

According to the mobile communication system according to the first embodiment of the present invention, the upper node GGSN can stop transmitting broadcast data to the lower node SGSN 1, by temporarily deleting the lower node SGSN 1 from the tree structure managed by the tree-structure management unit 13, based on a failure occurrence signal or an error signal transmitted from the lower node SGSN 1 in which a failure has occurred.

As the result, needless transmission of data can be avoided in the mobile communication system, and network resources can be effectively used.

Moreover, as shown in Fig. 1, the mobile communication system according to the first embodiment of the present invention can solve a problem in that the mobile station MS 4 located in the area 4 under control of the above-described lower node SGSN 4 remains in a state that broadcast data cannot be received, by establishing a session between the upper node GGSN and the lower node SGSN 4 at recovery of the lower node SGSN 4 from the failure, and by adding the lower node SGSN 4 again to the tree structure managed by the tree-structure management unit 13.

As explained above, the present invention provides a mobile communication system and a service control device which can improve efficiency for using network resources, and can avoid a state in that a mobile station under control of the lower node SGSN cannot receive broadcast data due to the occurred failure, even when failure occurs at a specific lower node SGSN in an MBMS.

Additional advantages and modifications will readily occur to those skilled in the art. Therefore, the invention in its broader aspects is not limited to the specific details and the representative embodiments shown and described herein. Accordingly, various modifications may be made without departing from the scope of the general inventive concept as defined by the appended claims and their equivalents.

## Claims

1. A mobile communication system in which an upper service control device transmits broadcast data to a plurality of mobile stations through a plurality of lower service control devices, based on a tree structure including a plurality of service control devices, wherein:
the upper service control device is configured to stop only transmitting the broadcast data to the lower service control device in which it is detected that a failure has occurred, when detecting that the failure has occurred in any one of the plurality of the lower service control devices.

2. The mobile communication system according to claim 1, wherein:
the upper service control device is configured to restart transmitting the broadcast data to the lower service control device in which it is detected that the failure has been recovered, when detecting that the failure has been recovered in any one of the plurality of the lower service control devices.

3. The mobile communication system according to claim 1, wherein:
the upper service control device is configured to use a common tree structure, when a plurality of kinds of broadcast data are transmitted.

4. A service control device, comprising:
a tree-structure manager configured to manage a tree structure including a plurality of service control devices; and
a transmitter configured to transmit broadcast data to a plurality of mobile stations through a plurality of lower service control device, based on the tree structure, wherein:
the tree structure manager is configured to delete the lower service control device which has transmitted a failure occurrence signal from the tree structure, when receiving the failure occurrence signal from any one of the plurality of lower service control devices.

5. The service control device according to claim 4, wherein:
the tree-structure manager is configured to add the lower service control device which has transmitted a failure recovery signal to the tree structure, when receiving a failure the failure recovery signal from any one of the plurality of lower service control devices.
